# EUROPÄISCHE PATENTSCHRIFT

(11) **EP 2 769 532 B1**
(45) Veröffentlichungstag und Bekanntmachung des Hinweises auf die Patenterteilung: **07.08.2019**
(21) Anmeldenummer: 12778706.7
(22) Anmeldetag: 19.10.2012
(51) Int. Cl.: H04M 1/253, H04M 1/2745

(54) **VERFAHREN ZUM AUFBAU EINER KOMMUNIKATIONSVERBINDUNG UND TELEKOMMUNIKATIONSENDGERÄT ZUR DURCHFÜHRUNG DIESES VERFAHRENS**
METHOD FOR ESTABLISHING A COMMUNICATION LINK AND A TELECOMMUNICATION TERMINAL FOR EXECUTING SAID METHOD
PROCÉDÉ POUR L'ÉTABLISSEMENT D'UNE LIAISON DE TÉLÉCOMMUNICATION, ET TERMINAL DE TÉLÉCOMMUNICATION POUR LA MISE EN OEUVRE DE CE PROCÉDÉ

(30) Priorität: 19.10.2011 DE 102011054625
(43) Veröffentlichungstag der Anmeldung: 27.08.2014
(73) Patentinhaber: Gigaset Communications GmbH, 40549 Düsseldorf (DE)
(72) Erfinder: ORD, Nicholas, 81337 München (DE); KAMPERSCHROER, Erich, 46499 Hamminkeln (DE)
(74) Vertreter: Michalski Hüttermann & Partner Patentanwälte mbB
(86) Internationale Anmeldenummer: PCT/EP2012/070753
(87) Internationale Veröffentlichungsnummer: WO 2013/057249

(56) Entgegenhaltungen:
- EP-A1- 1 786 182
- EP-A2- 1 879 359
- US-A1- 2008 056 208
- US-A1- 2008 059 627

## Beschreibung

Die vorliegende Erfindung betrifft ein Verfahren zum Aufbau einer Telekommunikationsverbindung mit einem Telekommunikationsendgerät, wobei das Telekommunikationsendgerät eine Speichereinheit zum Speichern einer Kontaktliste mit einer Mehrzahl Kontakten und Verbindungsmittel zum Durchführen eines Verbindungsaufbaus über eine Mehrzahl verschiedener Telekommunikationsdienstleister umfasst, und wobei zu jedem Kontakt eine Mehrzahl Verbindungsparameter für verschiedene Telekommunikationsdienstleister speicherbar sind. Weiterhin betrifft die Erfindung ein Telekommunikationsendgerät zur Verbindung mit einer Mehrzahl Telekommunikationsdienstleister umfassend eine Speichereinheit zum Speichern einer Kontaktliste mit einer Mehrzahl Kontakten und Verbindungsmittel zum Durchführen eines Verbindungsaufbaus über eine Mehrzahl verschiedener Telekommunikationsdienstleister, wobei zu jedem Kontakt eine Mehrzahl Verbindungsparameter für verschiedene Telekommunikationsdienstleister speicherbar sind.

Telekommunikationsendgeräte sind in verschiedenen Ausgestaltungen bekannt. Beispielsweise sind im Heim- oder Firmenbereich Telekommunikationsendgeräte nach dem DECT-Standard bekannt, die einen zuverlässigen Aufbau einer Telekommunikationsverbindung ermöglichen. Derartige Telekommunikationsendgeräte nach dem DECT-Standard haben den Vorteil, dass sie gegenüber Geräten, die im frei verfügbaren ISM-Band kommunizieren, beispielsweise nach dem Bluetooth- oder WLAN-Standard, eine Kommunikation mit einer großen Reichweite und guter Sprachqualität gewährleisten. DECT-Geräte sind für Telekommunikationsanwendungen optimiert, so dass sie auch eine lange Bereitschaftszeit und Nutzungsdauer für die Kommunikation ermöglichen. Telekommunikationsendgeräte nach dem DECT-Standard kommunizieren über eine Basis mit einem Telefonnetz, und sind daher an einen Standort gebunden.

Weiterhin sind Mobiltelefone zur Verbindung mit einem Mobilfunknetz bekannt, die eine Kommunikation von im Wesentlichen beliebigen Standorten aus über das Mobilfunknetz ermöglichen. Ein genereller Nachteil dieser Geräte ist jedoch, dass die Sprachqualität oft als gering empfunden wird, die Batterielebensdauer während eines Gesprächs und in Bereitschaft gering ist, und die Geräte zu klein sind für eine einfache Handhabung, während sie gleichzeitig als zu groß und zu schwer empfunden werden für das ständige Mitführen.

Auch werden heutzutage verschiedenste Datenverarbeitungsgeräte, beispielsweise Computer, Laptops, Tablet-PCs, Smartphones oder andere zum Aufbau einer Telekommunikationsverbindung über eine darunter liegende Datenverbindung verwendet. Dies bedeutet, dass auf der Datenverarbeitungseinrichtung ein Kommunikationsprogramm, beispielsweise zur Kommunikation über Skype, installiert ist, das Sprachinformationen in Dateninformationen umsetzt und über die Datenverbindung überträgt. Entsprechendes gilt für den Empfang von Sprachsignalen über die Datenverbindung. Durch die Installation verschiedener Applikationen können die Datenverarbeitungseinrichtungen verwendet werden, um über verschiedene Telekommunikationsdienstleister eine Telekommunikationsverbindung herzustellen. Als Telekommunikationsdienstleister ist dabei ein jeweiliger Anbieter von Telekommunikationsdienstleistungen zu verstehen, also eine Anbieter für den Aufbau von Telekommunikationsverbindungen. Für Festnetzverbindungen wird dabei praktisch kaum wahrgenommen, welcher Telekommunikationsdienstleister die Dienstleistungen anbietet, da eine Konfiguration über das Einstecken eines Telefons in eine Telefonanschlussdose geschieht. Prinzipiell besteht jedoch auch hier die Möglichkeit, durch die Verwendung eines Präfixes einen bestimmten Telekommunikationsdienstleister explizit auszuwählen. Beim Aufbau von Telekommunikationsverbindungen über IP-Netze, beispielsweise als Voice-over-IP (VoIP), ist jedoch eine explizite Auswahl des Telekommunikationsdienstleister erforderlich, was oft eine Anmeldung mit einer Identifikation für den Telekommunikationsdienstleister und einem Passwort beinhaltet.

Zu Telekommunikationsdienstleistern gehören somit alle Anbieter von Voice-over-IP (VoIP) Verbindungen, die eine Sprachkommunikation über ein IP-Netz ermöglichen. Entsprechende Datenverarbeitungsgeräte sind komplex im Aufbau und nur unter hohen Kosten herzustellen, und die Auswahl eines Telekommunikationsdienstleisters ist kompliziert. Zusätzlich sind die Datenverarbeitungsgeräte heutzutage oft mit einem Mobilfunkmodul ausgerüstet oder können damit nachgerüstet werden, so dass sie auch als Mobiltelefon eingesetzt werden können. Es gelten die Nachteile der Mobiltelefone hinsichtlich Gesprächsqualität, Batterielebensdauer und Handhabung, wobei Datenverarbeitungsgeräte häufig größer und schwere als reine Mobiltelefone sind.

Die Anzahl verfügbarer Telekommunikationsdienstleister nimmt ständig zu, wobei die Telekommunikationsdienstleister untereinander nicht kompatible Telekommunikationsdienstleistungen umfassen. Inkompatibel bedeutet in diesem Zusammenhang, dass für den Verbindungsaufbau jeweils unterschiedliche Applikationen und/oder Übertragungswege ausgewählt oder sogar gestartet werden müssen, und Verbindungsparameter für den Aufbau der Telekommunikationsverbindung in der jeweiligen Applikation eingegeben werde müssen.

Die meisten Nutzer von Telekommunikationsdienstleistungen besitzen heutzutage mehrere der oben genannten Telekommunikationsendgeräte, beispielsweise ein schnurloses Telefon nach dem DECT-Standard für die Kommunikation daheim, ein Mobiltelefon für die Kommunikation von einem beliebigen Ort, einem Desktop-Computer, beispielsweise mit Skype, um daheim möglichst kostengünstig eine Kommunikation durchführen zu können, und einen Laptop mit einem WLAN Modul, um Skype an verschiedenen Orten nutzen zu können. Entsprechend werden auf jedem dieser Telekommunikationsendgeräte Kontaktlisten vorgehalten, um den Aufbau einer Telekommunikationsverbindung unter Verwendung der zu einem Kontakt abgespeicherten Kontaktparameter den Aufbau einer Telekommunikationsverbindung schnell und einfach durchführen zu können. Hieraus ergeben sich verschiedene Probleme, wie im Weiteren erläutert wird. Zunächst ist es erforderlich, Kontaktlisten zwischen den einzelnen Geräten ständig zu synchronisieren, um jeweils aktuelle Kontaktparameter auf verschiedenen Telekommunikationsendgeräten verfügbar zu haben. Dies ist insbesondere erforderlich, wenn verschiedene Telekommunikationsendgeräte zum Aufbau einer Telekommunikationsverbindung über identische Telekommunikationsdienstleister ausgeführt sind, beispielsweise wie oben ausgeführt ein Desktop-Computer und ein Laptop. Ähnliches gilt für herkömmliche Rufnummernlisten, wie sie beispielsweise zur Kommunikation mit einem DECT-Telefon und einem Mobiltelefon, die aufgrund einheitlicher regulatorischer Vorgaben identische Kontaktparameter zum Aufbau einer Telekommunikationsverbindung verwenden, obwohl die Telekommunikationsverbindung über verschiedene Telekommunikationsdienstleister aufgebaut werden kann. Zwar ist es heutzutage bekannt, Kontakte auf verschiedenen Telekommunikationsendgeräten miteinander oder über ein drittes Gerät, beispielsweise einen PC, miteinander synchronisieren, wobei sich jedoch in der Praxis häufige Probleme ergeben. Diese Probleme umfassen die unterschiedliche Kodierung der Kontakte und der darin enthaltenen Kontaktparameter, beispielsweise aufgrund der Verwendung unterschiedlicher Zeichensätze, wobei die heutzutage übliche Verwendung von Sonderzeichen, die beispielsweise nur dem deutschen Alphabet bekannt sind, vielfach Probleme bereitet. Dies hat zur Folge, dass Kontakte und Kontaktparameter nicht richtig dargestellt werden, so dass eine Synchronisation schwierig oder sogar unmöglich ist. Hinzu kommt, dass Kontakte auf verschiedenen Telekommunikationsendgeräten und/oder verschiedener Telekommunikationsdienstleister häufig mit unterschiedlichen Namen zur Identifikation eines Kontakts ausgeführt sind. Dieselbe Person kann beispielsweise auf einem DECT-Telefon als Kontakt mit seinem vollständigen Namen gespeichert sein und auf Skype unter einem beliebigen Alias. Eine automatische Zusammenführung der Kontakte zu einer einzigen Person kann daher nicht automatisch durchgeführt werden. Teilweise werden die Namen der Kontakte sogar von den Telekommunikationsdienstleistern vorgegeben, so dass eine Synchronisation zwischen verschiedenen Kontakten einer Person praktisch ausgeschlossen ist.

Bei heutigen Telekommunikationsendgeräten ist weiterhin nachteilig, dass der Nutzer selber im Detail auswählen muss, wie er zu einer Person, zu der ein Kontakt gespeichert ist, eine Telekommunikationsverbindung aufbaut. Dabei ist üblicherweise zu berücksichtigen, dass sich eine Person zu verschiedenen Zeiten an verschiedenen Orten aufhalten kann, und an den verschiedenen Orten über verschiedene Telekommunikationsdienstleister erreichbar sein kann. Entsprechend kann es vorkommen, dass beispielsweise ein Aufbau einer Telekommunikationsverbindung über Skype mit Kontaktparametern gestartet wird, und die Telekommunikationsverbindung mit der gewünschten Person nicht zustande kommt, weil diese Person zwar zu Hause ist und ihren Computer gestartet hat, sich allerdings nicht bei Skype angemeldet hat. Genauso wird ein Anruf über einen Telekommunikationsdienstleister ins Leere laufen, wenn von der anzurufenden Person eine Telefonnummer, beispielsweise die Büronummer, gewählt wird, sich diese Person aber bereits zu Hause aufhält und lediglich über die Heimnummer erreichbar ist. Entsprechend kann eine Vielzahl von Versuchen zum Aufbau einer Telekommunikationsverbindung erforderlich sein, was zu einer hohen Unzufriedenheit der Anrufer führt.

Aus der US 2008/0059627 A1 ist die Ausbildung eines Kommunikationsgeräts und insbesondere die Vereinheitlichung verschiedener Dienstleister und Kommunikationsprotokolle in einem einzelnen Gerät bekannt. Hierzu weist das Kommunikationsgerät einen Speicher zum Speichern einer Datenbank auf, wobei die Datenbank eine Mehrzahl von Kontaktnamen beinhaltet und jedem Kontaktnamen ein oder mehrere Kommunikationskonten oder Dienstleister zugeordnet sein können, über die der jeweilige Kontakt kontaktierbar ist. Zum Aufbau einer Kommunikationsverbindung wird ein Kontaktname aus der Datenbank ausgewählt. Der Nutzer kann dann ein Kommunikationskonto des Kontaktnamens zum Initiieren der Telekommunikationsverbindung auswählen. Alternativ dazu kann durch die direkte Auswahl des Kontaktnamens eine Telekommunikationsverbindung mit einem der Kommunikationskonten initiiert werden. Hierbei kann zudem vorgesehen sein, dass der Nutzer global eine Priorisierung von Dienstleistern definiert und sofern der Kontaktname ein Kommunikationskonto des priorisierten Dienstleiters aufweist, über das Kommunikationskonto des priorisierten Dienstleisters die Telekommunikationsverbindung initiiert wird.

Die US 2008/0056208 A1 beschreibt ein Dual-Mode Gerät für die Sprachkommunikation in einem peer-to-peer Kommunikationssystem. Das Kommunikationssystem umfasst eine Basisstation und ein mit der Basisstation schnurlos verbundenes Handgerät. Die Basisstation umfasst ein erstes Interface zu einem Netzwerk und ein zweites Interface zu einem öffentlichen Telefonnetzwerk.

Die EP 1 786 182 A1 beschreibt ein Telekommunikationsgerät mit einer Telefonleitungs- und Internetleitungsanalyse. Das Telekommunikationsgerät weist einen Speicher zur Speicherung von Daten und ein Interface für eine Verbindung zu einem Festnetz bzw. in ein Netzwerk auf. Zum Aufbau einer Telekommunikationsverbindung mit einem Kontakt wählt der Benutzer das Endgerät des Kontakts aus und drückt den Anrufknopf. Das Telekommunikationsgerät des Nutzers prüft die verfügbaren Leitungen entsprechend der Leitungsqualität und stellt einen Verbindungsaufbau her.

Aus der EP 1 879 359 A2 ist ein Verfahren für eine intelligente Wahlwiederholung mit Statusinformationen bekannt.

Ausgehend von dem oben genannten Stand der Technik liegt der Erfindung somit die Aufgabe zugrunde, ein Verfahren zum Aufbau einer Telekommunikationsverbindung mit einem Telekommunikationsendgerät und ein solches Telekommunikationsendgerät anzugeben, die einen einfachen und schnellen Aufbau einer Telekommunikationsverbindung ermöglichen. Weiterhin liegt der Erfindung die Aufgabe zugrunden, ein besonders komfortables Telekommunikationsendgerät zur Durchführung des Verfahrens anzugeben, das einfach in der Handhabung ist und eine hohe Nutzerzufriedenheit erzeugt.

Die Lösung der Aufgabe erfolgt erfindungsgemäß durch die Merkmale der unabhängigen Ansprüche. Vorteilhafte Ausgestaltungen der Erfindung sind in den Unteransprüchen angegeben.

Grundidee der vorliegenden Erfindung ist es somit, den Aufbau einer Telekommunikationsverbindung dahingehend zu automatisieren, dass ein Nutzer des Telekommunikationsendgeräts lediglich einen Kontakt aus der Kontaktliste auswählt und den Aufbau der Telekommunikationsverbindung mit diesem Kontakt initiieren muss, und der eigentliche Aufbau der Telekommunikationsverbindung im Hintergrund, das heißt für den Nutzer unsichtbar, geschieht. Dadurch wird der Nutzer von lästigen Details wie der Auswahl des Telekommunikationsdienstleisters und/oder der Auswahl der jeweils optimalen Verbindungsparameter befreit. Der automatische Aufbau der Telekommunikationsverbindung mit den ausgewählten Verbindungsparametern über den ausgewählten Telekommunikationsdienstleister umfasst alle erforderlichen Schritte. Dies bedeutet, dass die Verbindungsparameter von dem Kontakt automatisch an die Verbindungsmittel übertragen werden und die Verbindungsmittel unter Verwendung dieser Verbindungsparameter automatisch einen Verbindungsaufbau durchführen. In dem Fall des Aufbaus der Telekommunikationsverbindung über ein übliches Telekommunikationsnetz, zum Beispiel ein Mobilnetz, auch bekannt als Public Land Mobile Network (PLMN), oder ein Festnetz, auch bekannt als Public Switched Telephone Network (PSTN), dass die Verbindungsparameter eine Rufnummer sind und eine Wählverbindung mit der Rufnummer aufgebaut wird. Bei einem Datenverarbeitungsgerät, das als Telekommunikationsendgeräte ausgeführt ist und entsprechend ein Mikrofon und einen Lautsprecher aufweist, können die Verbindungsparameter, beispielsweise ein Skype-Name, an die Verbindungsmittel übertragen werden. Insgesamt ergibt sich für einen Nutzer eine sehr komfortable Möglichkeit zum Verbindungsaufbau, da er sich nicht über vorhandene Verbindungsparameter und Applikationen von Telekommunikationsdienstleistern kümmern muss. Die automatische Auswahl von Telekommunikationsdienstleister und Verbindungsparameter stellt sicher, dass nur ein Verbindungsaufbau gestartet wird, wenn Verbindungsparameter und dazu passender Telekommunikationsdienstleister verfügbar sind.

Gemäß einer vorteilhaften Ausführungsform der Erfindung ist vorgesehen, dass der Schritt des automatischen Auswählens des Telekommunikationsdienstleisters und der Verbindungsparameter des Kontakts für diesen Telekommunikationsdienstleister das Auswerten von Statusinformationen zu dem Kontakt von wenigstens einem Telekommunikationsdienstleister umfasst. Statusinformationen können verschiedene Informationen zum Kommunikationsstatus einer Person über einen Telekommunikationsdienstleister sein. Beispielsweise ist es bei Telekommunikationsdienstleistern, die über Datennetze kommunizieren, wie zum Beispiel VoIP oder Skype bekannt, dass ein Nutzer automatisch oder manuell seine Verbindung mit diesen Telekommunikationsanbietern und seine Bereitschaft zur Annahme einer eingehenden Telekommunikationsverbindung durch ein Präsenzsignal anzeigen lassen kann. Bevorzugt ist vorgesehen, dass der Aufbau der Telekommunikationsverbindung über einen Telekommunikationsdienstleister gestartet wird, der einen Präsenzstatus der anzurufenden Person angibt. Auch kann eine bereits bestehende Kommunikation einer anzurufenden Person über einen Telekommunikationsdienstleister erfasst und angezeigt werden. Für die vorgenannten Dienste ist dies ebenso möglich wie die Anzeige der Präsenzinformation. Alternativ eignet sich beispielsweise der Datenkanal eines ISDN-Anschlusses, um eine besetzte Leitung abzufragen. Vorzugsweise wird der Aufbau der Telekommunikationsverbindung abgebrochen, sobald eine anzurufende Person über nur einen Telekommunikationsdienstleister einen Besetztstatus erzeugt, da eine parallele Kommunikation über verschiedene Telekommunikationsverbindungen üblicher Weise nicht gewünscht bzw. auch nicht durchführbar ist. Ausnahmen bestehen lediglich, wenn eine Konferenzschaltung zwischen mehreren Teilnehmern gewünscht ist. Hierfür ist es teilweise erforderlich, dass alle Teilnehmer über denselben Telekommunikationsdienstleister kommunizieren. Bevorzugt ist daher vorgesehen, dass bei einem Besetztstatus der anzurufenden Person über einen Telekommunikationsdienstleister der Anrufer gefragt wird, ob eine Telefonkonferenz gewünscht ist, und in diesem Fall ein Verbindungsaufbau über denselben Telekommunikationsdienstleister, der den Besetztstatus anzeigt, gestartet wird.

Erfindungsgemäß ist zudem vorgesehen, dass der Schritt des automatischen Auswählens des Telekommunikationsdienstleisters und der Verbindungsparameter des Kontakts für diesen Telekommunikationsdienstleister das Auswählen des Telekommunikationsdienstleisters und der Verbindungsparameter gemäß vorgebbarer Prioritäten umfasst. Diese Prioritäten können beispielsweise global für das Telekommunikationsendgerät vorgegeben werden, so dass unter Berücksichtigung von verfügbaren Telekommunikationsdienstleistern und Verbindungsparametern für alle Kontakte die gleichen Prioritäten gelten. Beispielsweise kann als Priorität vorgegeben werden, alle Personen, deren Kontakte Verbindungsparameter für Skype umfassen, zunächst über Skype anzurufen sind, da es sich hierbei üblicherweise um eine kostenlose oder kostengünstige Telekommunikationsverbindung handelt. Die Prioritäten können auch individuell für einzelne Kontakte vorgegeben werden. Für Personen, die mit besonders hoher Wahrscheinlichkeit mit bestimmten Verbindungsparametern erreichbar sind, das heißt der Aufbau der Telekommunikationsverbindung ist mit einer hohen Wahrscheinlichkeit erfolgreich, kann als Priorität die Verwendung dieser Verbindungsparameter zum Aufbau der Telekommunikationsverbindung über den entsprechenden Telekommunikationsdienstleister verwendet werden. Die Prioritäten können auch dynamisch generiert werden, beispielsweise unter Verwendung von Least-Cost-Routing-Verfahren, die die günstigste Möglichkeit zum Aufbau einer Telekommunikationsverbindung zu einer bestimmten Zeit unter Berücksichtigung der verfügbaren Verbindungsparameter und der vorhandenen Verbindungsmittel zum Durchführen des Verbindungsaufbau ermittelt. Auch eine Kombination verschiedener Prioritäten ist möglich.

Weiterhin ist erfindungsgemäß vorgesehen, dass jeder Kontakt als Container für die Aufnahme von einer Mehrzahl Einzelkontakte ausgeführt ist, und der Schritt des automatischen Auswählens des Telekommunikationsdienstleisters und der Verbindungsparameter des Kontakts für diesen Telekommunikationsdienstleister das Auswählen der Verbindungsparameter eines Einzelkontakts umfasst. Die Verwendung von Containern ist besonders vorteilhaft, da vorhandene Einzelkontakte, die auf verschiedenen Telekommunikationsendgeräten bzw. bei verschiedenen Telekommunikationsdienstleistern üblicherweise als Kontakt bezeichnet werden, vollständig in den Container aufgenommen werden, wodurch sich Probleme hinsichtlich der Verwendung verschiedener Zeichensätze oder Ähnlichem auf verschiedenen Telekommunikationsendgeräten bzw. durch verschiedene Telekommunikationsdienstleister dahingehend reduzieren, dass die Einzelkontakte jeweils unverändert aufgenommen werden. Auch können in einem Container Einzelkontakte zusammengeführt werden, denen unterschiedliche Namen zugeordnet sind. Kontakte einer Person, die in einem Telekommunikationsendgerät unter dem vollen Namen gespeichert sind, und in einem anderen Telekommunikationsendgerät unter einem Alias gespeichert sind, können ohne Weiteres zusammengeführt werden, ohne dass sich hieraus Probleme ergeben. Dem Container kann wiederum ein logischer Name, das heißt ein Identifikationsparameter, zugewiesen werden, der seinerseits beliebig gewählt werden kann. Einzelkontakte können insbesondere bezogen auf einen Telekommunikationsdienstleister sein, wenn der Einzelkontakt nur Verbindungsparameter für diesen einen Telekommunikationsdienstleister umfasst. Beim Auswählen der Verbindungsparameter wird entsprechend über den Container auf einen Einzelkontakt in diesem Container zugegriffen, und über den Einzelkontakt auf die dazu gespeicherten Verbindungsparameter. Die Handhabung der Einzelkontakte ist besonders einfach und ermöglicht eine einfache Übertragung von einer Mehrzahl an Geräten zu dem Telekommunikationsendgerät. So können Einzelkontakte beispielsweise in einer grafischen Benutzeroberfläche durch einfaches ziehen (drag & drop) in einem Container abgelegt werden. Eine spätere Synchronisation kann für alle Einzelkontakte unabhängig erfolgen, ohne dass andere Einzelkontakte eines Kontakts betroffen sind.

Überdies ist erfindungsgemäß vorgesehen, dass der Schritt des Auswählens des Telekommunikationsdienstleisters und der Verbindungsparameter gemäß vorgebbarer Prioritäten das Auswählen eines Einzelkontakts gemäß vorgebbarer Prioritäten umfasst. Die Einzelkontakte können beispielsweise dahingehend priorisiert werden, dass diese Kontakte von einem bestimmten Telekommunikationsendgerät immer als besonders aktuell angesehen werden und daher bevorzugt zum Aufbau einer Telekommunikationsverbindung verwendet werden. Bei Einzelkontakten, die spezifisch für einen Telekommunikationsdienstleister sind, das heißt die Verbindungsparameter nur für den Verbindungsaufbau über diesen Telekommunikationsdienstleister umfassen, kann durch Priorisieren der Einzelkontakte implizit der Telekommunikationsdienstleister priorisiert werden.

Gemäß einer bevorzugten Ausführungsform der Erfindung ist vorgesehen, dass der Schritt des Auswählens eines Einzelkontakts gemäß vorgebbarer Prioritäten das Auswählen eines Einzelkontakts gemäß seiner Anordnung in einer logischen Reihe innerhalb des Kontakts beinhaltet. Als logische Reihe wird hierbei jegliche logische Verknüpfung der Einzelkontakte angesehen. Auch Mehrfachverknüpfungen können vorgesehen sein. Eine derartige Anordnung kann besonders einfach durchgeführt werden, wenn eine graphische Darstellung der Einzelkontakte erfolgt, und die Einzelkontakte in einen Container grafisch beispielsweise untereinander durch einfaches Ziehen (drag & drop) angeordnet werden. Auf analoge Weise lassen sich beispielsweise auch Verbindungsparameter innerhalb eines Einzelkontakts priorisieren.

Gemäß einer bevorzugten Ausführungsform der Erfindung ist vorgesehen, dass die Schritte des automatischen Auswählens des Telekommunikationsdienstleisters und der Verbindungsparameter des Kontakts für diesen Telekommunikationsdienstleister sowie des automatischen Aufbaus der Telekommunikationsverbindung mit den ausgewählten Verbindungsparametern über den ausgewählten Telekommunikationsdienstleister wiederholt durchgeführt werden und, sobald eine Telekommunikationsverbindung hergestellt wurde, der Verbindungsaufbau über alle weiteren Telekommunikationsdienstleister abgebrochen wird. Das Telekommunikationsendgerät beginnt somit automatisch den Verbindungsaufbau parallel über verschiedene Telekommunikationsdienstleister. Parallel ist hier derart zu verstehen, dass der Verbindungsaufbau prinzipiell nacheinander für verschiedene Telekommunikationsdienstleister initiiert werden kann, aber zumindest teilweise parallel auf den vollständigen Aufbau der Telekommunikationsverbindung über einen der mehreren Telekommunikationsdienstleister gewartet wird. Sobald die angerufene Person über einen der Telekommunikationsdienstleister den Anruf angenommen hat, wird der Verbindungsaufbau über die anderen Telekommunikationsanbieter unmittelbar gestoppt. Insbesondere werden so Anrufkosten vermieden, die beispielsweise durch eine Rufannahme durch automatische Rufannahmesysteme, beispielsweise ein Anrufbeantworter, entstehen können.

Gemäß einer bevorzugten Ausführungsform der Erfindung ist vorgesehen, dass der Schritt des automatischen Aufbaus der Telekommunikationsverbindung mit den ausgewählten Verbindungsparametern über den ausgewählten Telekommunikationsdienstleister ohne erfolgreichen Verbindungsaufbau abgebrochen wird und das Verfahren mit dem Schritt des automatischen Auswählens des Telekommunikationsdienstleisters und der Verbindungsparameter des Kontakts für diesen Telekommunikationsdienstleister fortgesetzt wird, bis die Telekommunikationsverbindung aufgebaut ist. Somit werden verfügbaren Verbindungsparameter über verfügbare Telekommunikationsdienstleister ausgewählt und der darauf basierende Aufbau der Kommunikationsverbindung gestartet, bis eine Telekommunikationsverbindung aufgebaut werden kann. Dabei kann nach den bereits genannten Prioritäten vorgegangen werden, um beispielsweise zuerst über Telekommunikationsdienstleister, die einen Präsensstatus anzeigen, den Aufbau der Telekommunikationsverbindung zu versuchen. Alternativ kann der Aufbau der Telekommunikationsverbindung zunächst über Telekommunikationsdienstleister versucht werden, welche die Telekommunikationsverbindung gratis oder zu besonders niedrigen Kosten anbieten. Bevorzugt erfolgt eine Kombination mit einem parallelen Aufbau der Telekommunikationsverbindung über verschiedene Telekommunikationsdienstleister, so dass beispielsweise in einem ersten Schritt der Aufbau der Telekommunikationsverbindung parallel über alle Telekommunikationsdienstleister, die eine kostenlose Telekommunikationsverbindung anbieten, initiiert wird. In folgenden Schritten wird der Aufbau der Telekommunikationsverbindung über Telekommunikationsdienstleister initiiert, die unterhalb aufsteigender Grenzwerte für die Telekommunikationsverbindung liegen.

Gemäß einer bevorzugten Ausführungsform der Erfindung ist vorgesehen, dass die Schritte des Auswählens eines Kontakts aus der Kontaktliste sowie des Initiierens des Aufbaus der Telekommunikationsverbindung mit dem ausgewählten Kontakt das Durchführen einer Sprachsteuerung umfassen. Eine Sprachsteuerung ist besonders komfortabel und kann auch bei Telekommunikationsendgeräten durchgeführt werden, die besonders klein ausgeführt sind und entsprechend eine kleine Benutzerschnittstelle aufweisen.

Gemäß einer vorteilhaften Ausführungsform der Erfindung ist vorgesehen, dass die Verbindungsmittel zum Durchführen eines Verbindungsaufbaus über eine Mehrzahl verschiedener Telekommunikationsdienstleister eine Funkeinheit nach dem DECT-Standard umfassen. Die Funkeinheit nach dem DECT-Standard ist besonders geeignet zum Aufbau einer Telekommunikationsverbindung, da der DECT-Standard eine hohe Sprachqualität über eine große Reichweite ermöglicht. Entsprechend kann mit einer Basisstation, die als Gegenstelle zum Telekommunikationsendgerät dient und ebenfalls eine Funkeinheit nach dem DECT-Standard umfasst, üblicherweise eine Wohnung vollständig abgedeckt werden. Demgegenüber sind Verbindungen über WLAN oder Bluetooth häufig nur innerhalb eines Zimmers oder günstigsten Falls bis in ein Nachbarzimmer möglich. Alternativ oder zusätzlich können die Verbindungsmittel eine analoge und/oder eine digitale Telefoneinheit umfassen, über die eine Verbindung mit einem Festnetz über Kabel hergestellt wird. Das Festnetz (PSTN) ist ein übliches analoges oder digitales Telefonnetz, beispielsweise ein digitales Telefonnetz nach dem ISDN-Standard.

Gemäß einer bevorzugten Ausführungsform der vorliegenden Erfindung ist vorgesehen, dass die Verbindungsmittel zum Durchführen eines Verbindungsaufbaus über eine Mehrzahl verschiedener Telekommunikationsdienstleister eine Datenkommunikationseinheit und eine Umsetzungseinheit von Sprache auf Datenkommunikation umfassen. Die Datenkommunikationseinheit stellt eine grundlegende Datenverbindung zu einem Datennetz, üblicherweise das Internet, bereit. Die Datenkommunikationseinheit ist beispielsweise als Netzwerkschnittstelle für eine weit verbreitete Ethernet-Verkabelung ausgeführt. Besonders bevorzugt ist die Datenkommunikationseinheit als schnurlose Datenkommunikationseinheit ausgeführt, beispielsweise nach dem WLAN-Standard oder zur Kommunikation über Bluetooth. Die Umsetzungseinheit umfasst eine Applikation, die üblicherweise in Software implementiert ist und auf dem Telekommunikationsendgerät ausgeführt wird. Die Umsetzungseinheit kann beispielsweise zur Kommunikation über Skype ausgeführt sein, oder als Kommunikationssoftware zur Kommunikation über einen VoIP-Telekommunikationsdienstleister. Die Applikation baut die Telekommunikationsverbindung über die Datenverbindung auf. Beim automatischen Aufbau der Telekommunikationsverbindung wird entsprechend - falls noch nicht erfolgt - die Applikation für den Telekommunikationsdienstleister gestartet und - soweit erforderlich - eine Anmeldung durchgeführt, automatisch die Datenverbindung über die Datenkommunikationseinheit aufgebaut und automatisch von der Applikation die Telekommunikationsverbindung mit den ausgewählten Verbindungsparametern aufgebaut. Eine manuelle Übergabe der Verbindungsparameter oder andere manuelle Interaktionen sind nicht erforderlich.

Gemäß einer bevorzugten Ausführungsform der Erfindung ist vorgesehen, dass das Telekommunikationsendgerät ein Zentralgerät und ein Satellitengerät umfasst, die kabellos miteinander verbunden sind, wobei die Schritte des Auswählens eines Kontakts aus der Kontaktliste und des Initiierens eines Aufbaus der Telekommunikationsverbindung in dem Satellitengerät und die übrigen Schritte in dem Zentralgerät durchgeführt werden. Somit ist es möglich, ein besonders leichtes und einfach zu bedienendes Satellitengerät bereitzustellen, das von einer Person leicht zur Telekommunikation verwendet kann. Hierbei hat sich herausgestellt, dass kleine Geräte besonders vorteilhaft sind, da sie ein Ermüden durch das Halten des Telekommunikationsendgeräts verhindern. Besonders bevorzugt ist das Satellitengerät zur Durchführung einer Freisprechverbindung ausgeführt, und wird an einer geeigneten Stelle am Körper bzw. der Kleidung einer Person befestigt oder gehalten. Das Zentralgerät kann verwendet werden, um Konfigurations- und Managementaufgaben des Telekommunikationsendgeräts oder der Telekommunikationsverbindung durchzuführen, und kann somit eine geeignete Benutzerschnittstelle aufweisen. Bevorzugt kann das Zentralgerät auch während einer Kommunikation über das Satellitengerät verwendet werden, um die Konfigurations- und Managementaufgaben vorzunehmen. Da das Zentralgerät nicht während der Kommunikation die Telekommunikationsverbindung von der Person gehalten oder getragen werden muss, unterliegt das Zentralgerät keinen strikten Anforderungen an Gewicht und Größe, wie dies bei dem Satellitengerät oder einem einteiligen Telekommunikationsendgerät, das beispielsweise vom Benutzer an seinem Ohr gehalten wird, der Fall ist, so dass es mit einer einfach zu bedienenden Benutzerschnittstelle ausgestattet werden kann. Insbesondere kann das Zentralgerät mit einer Anzeigevorrichtung ausgeführt werden, die eine deutliche und hinreichend große Darstellung von Informationen ermöglicht. Vorzugsweise ist die Anzeigevorrichtung ein berührungsempfindliches Display zur gleichzeitigen Bedienung.

Gemäß einer bevorzugten Ausführungsform der Erfindung ist vorgesehen, dass das Zentralgerät und das Satellitengerät jeweils ein Funkmodul nach dem DECT-Standard zur kabellosen Kommunikation umfassen. Die Vorteile der Kommunikation nach dem DECT-Standard sind somit auch für die Verbindung von Zentralgerät und Satellitengerät verfügbar. Wenn das Zentralgerät nach dem DECT-Standard ausgeführt ist, ergibt sich darüber hinaus die Möglichkeit der Verwendung des Zentralgeräts als Repeater, wodurch sich eine Reichweitenvergrößerung für das Satellitengerät in Bezug auf die Basis ergibt. Prinzipiell kann das Satellitengerät aber auch über die Basis mit dem Zentralgerät kommunizieren. Im Einsatz kann es vorkommen, dass sich das Satellitengerät näher an der Basis als an dem Zentralgerät befindet. In diesem Fall kann der Aufbau der Telekommunikationsverbindung wie zuvor beschrieben durchgeführt werden, wobei die Telekommunikationsverbindung direkt von dem Satellitengerät über die Basis ohne das Zentralgerät als Zwischenstation aufgebaut wird.

Gemäß einer bevorzugten Ausführungsform der Erfindung ist vorgesehen, dass das Telekommunikationsendgerät eine Mehrzahl Satellitengeräte umfasst. Diese greifen gemeinsam auf das Zentralgerät und insbesondere auf die darauf gespeicherte Kontaktliste zu, so dass die Kontaktliste nur an einer Stelle vorgehalten und gepflegt werden muss. Durch die Verbindungsmittel zum Durchführen eines Verbindungsaufbaus über eine Mehrzahl verschiedener Telekommunikationsdienstleister können somit parallele Telekommunikationsverbindungen von den verschiedenen Satellitengeräten über das Zentralgerät aufgebaut werden. Sofern ein Telekommunikationsdienstleister den Aufbau paralleler Telekommunikationsverbindungen ermöglicht, kann ebenfalls von verschiedenen Satellitengeräten aus über einem Telekommunikationsanbieter der Aufbau paralleler Telekommunikationsverbindungen durchgeführt werden.

Nachfolgend wird die Erfindung unter Bezugnahme auf die anliegende Zeichnung anhand bevorzugter Ausführungsformen näher erläutert.

Es zeigen
- Fig. 1: eine schematische Ansicht eines Telekommunikationsendgeräts gemäß einer ersten Ausführungsform der Erfindung,

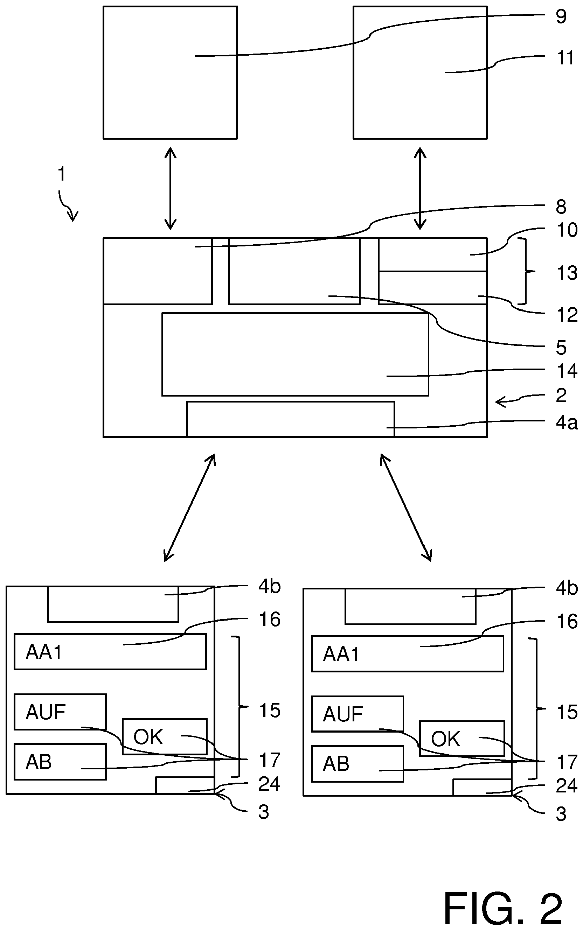

- Fig. 2: eine schematische Darstellung eines Telekommunikationsendgeräts gemäß einer zweiten Ausführungsform der Erfindung,

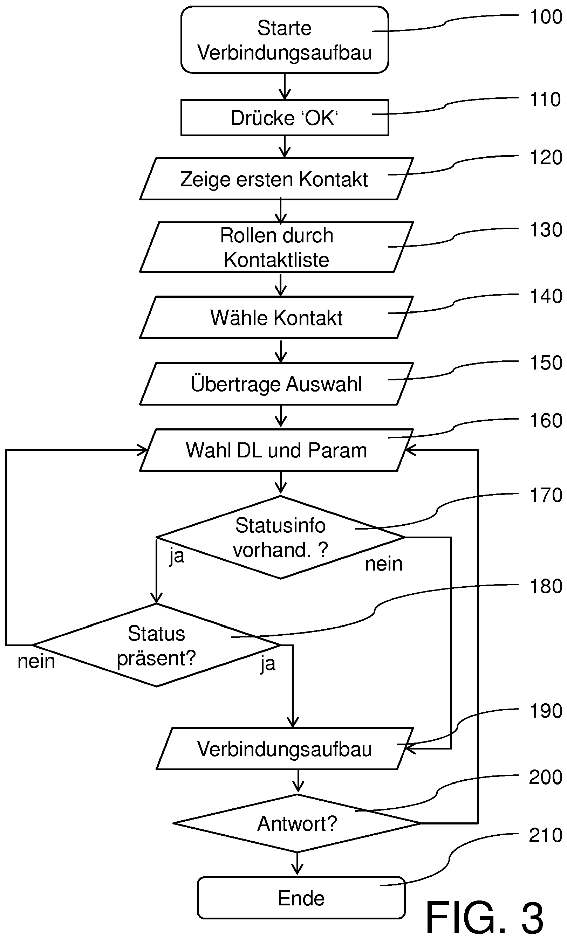

- Fig. 3: ein Ablaufdiagramm für einen Aufbau einer Telekommunikationsverbindung gemäß den Telekommunikationsendgeräten der obigen Ausführungsformen der vorliegenden Erfindung, und
- Fig. 4: eine schematische Darstellung einer Kontaktliste mit Containern als Kontakten, die verschiedene Einzelkontakte enthalten, gemäß den obigen Ausführungsformen der Erfindung.

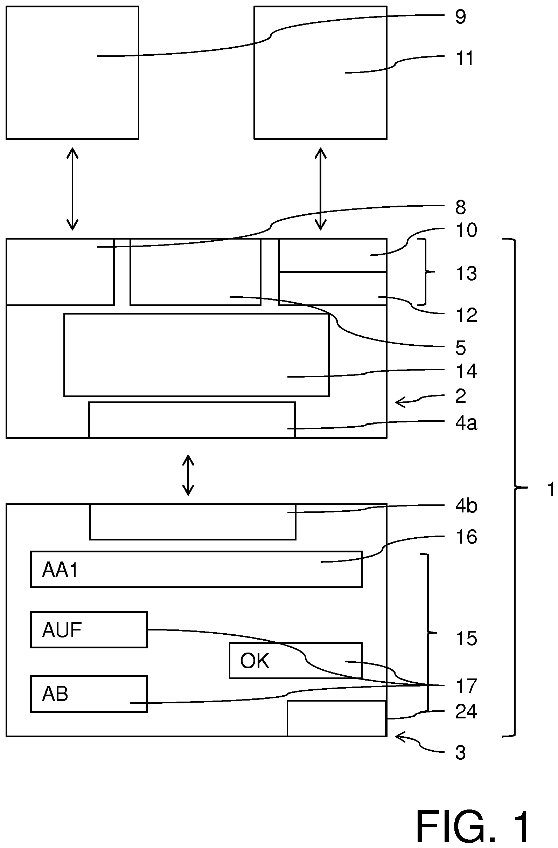

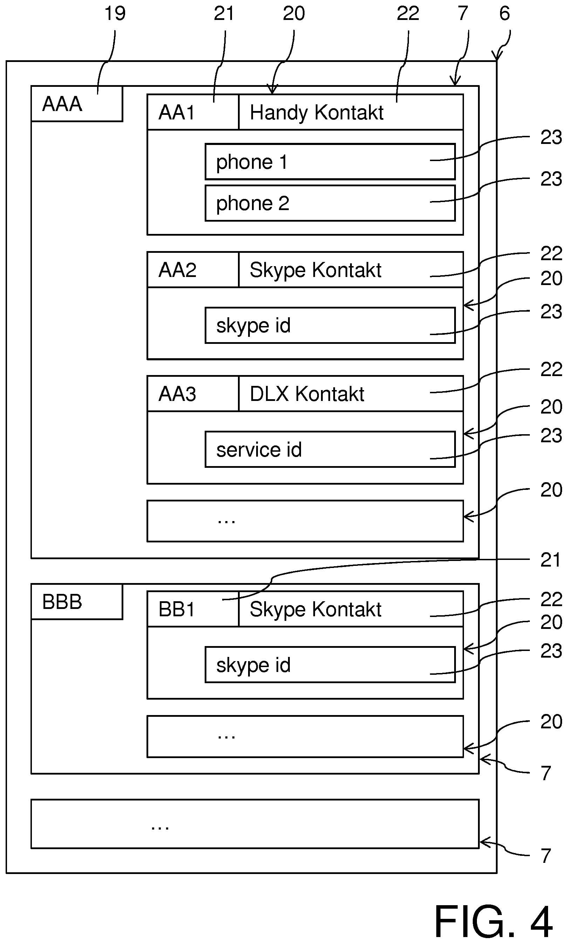

Figur 1 zeigt ein Telekommunikationsendgerät 1 gemäß einer ersten Ausführungsform der Erfindung. Das Telekommunikationsendgerät 1 umfasst ein Zentralgerät 2 und ein Satellitengerät 3, die jeweils ein Funkmodul 4a, 4b nach dem DECT-Standard zur kabellosen Kommunikation umfasst. Das Zentralgerät 2 umfasst eine Speichereinheit 5 zum Speichern einer Kontaktliste 6, die in Figur 4 im Detail gezeigt ist und eine Mehrzahl Kontakte 7 umfasst.

Das Telekommunikationsendgerät 1 umfasst weiterhin eine Funkeinheit 8 als Verbindungsmittel für den Aufbau einer Telekommunikationsverbindung über eine DECT-Basis 9, die an ein hier nicht gezeigtes Festnetz, auch bekannt als Public Switched Telephonie Network (PSTN), angeschlossen ist.

Das Zentralgerät 2 umfasst weiterhin eine Datenkommunikationseinheit 10 zur Herstellung einer Datenkommunikationsverbindung, auch als Netzwerkverbindung oder IP-Verbindung bekannt, mit einem Internetzugangsgerät 11, das in diesem Ausführungsbeispiel als DSL-Modem mit WLAN geführt ist. Entsprechend ist die Datenkommunikationseinheit 10 als WLAN-Modul ausgeführt. Das Zentralgerät 2 umfasst weiterhin eine Umsetzungseinheit 12 für die Umsetzung von Sprache auf eine Datenverbindung. Die Umsetzungseinheit 12 bildet zusammen mit der Datenkommunikationseinheit 10 ein weiteres Verbindungsmittel 13 zum Aufbau einer Datenkommunikationsverbindung. Die Umsetzungseinheit 12 umfasst in diesem Ausführungsbeispiel eine Applikation zur Kommunikation mit Skype als Telekommunikationsdienstleister, die über die Datenkommunikationseinheit 10 eine Telekommunikationsverbindung aufbauen kann.

Das Zentralgerät 2 umfasst weiterhin eine Anzeigevorrichtung 14, die als berührungsempfindliches Display zur Konfiguration und zum Management des Telekommunikationsendgeräts 1 ausgeführt ist.

Das Satellitengerät 3 umfasst außerdem eine Benutzerschnittstelle 15 mit einer Displayzeile 16 zur Anzeige von Informationen und drei Bedienknöpfen 17.

In der Speichereinheit 5 ist wie bereits ausgeführt die Kontaktliste 6 mit einer Mehrzahl von Kontakten 7 gespeichert. Zur Identifikation ist jedem Kontakt 7 ein Namensfeld 19 zugeordnet. Jeder Kontakt 7 ist als Container ausgeführt, der eine Mehrzahl Einzelkontakte 20 enthalten kann, wie in Fig. 4 dargestellt ist. Die Einzelkontakte 20 entsprechen Kontakten von unterschiedlichen Telekommunikationsendgeräten und/oder verschiedenen Telekommunikationsdienstleistern.

Jeder Einzelkontakt 20 umfasst ein Identifikationsfeld 21, in dem ein beliebig gestalteter Name für den Einzelkontakt 20 speicherbar ist, beispielsweise ein Klarname oder ein Alias, und ein Servicefeld 22, das einen Ursprung des Einzelkontakts 20 angibt. In diesem Ausführungsbeispiel umfasst der erste Kontakt 7 der Kontaktliste 6 drei explizit gezeigte Einzelkontakte 20. Hierbei handelt es sich beispielhaft um einen Handy-Kontakt, also einen Einzelkontakt 20, der von einem Handy übertragen wurde, um einen Skype-Kontakt, der von dem namensgleichen Telekommunikationsdienstleister verwendet wird, und einen Kontakt eines dritten Telekommunikationsdienstleisters (DLX), der beispielsweise ein VoIP-Telekommunikationsanbieter sein kann. Der Kontakt 7 kann prinzipiell eine beliebige Anzahl Einzelkontakte 20 verschiedenster Art umfassen. Die Anzahl der Kontakte 7 und der jeweils dazugehörigen Einzelkontakte 20 ist lediglich durch die Größe der Speichereinheit 5 begrenzt. Jeder Einzelkontakt 20 umfasst weiterhin Verbindungsparameter 23, die den Aufbau einer Telekommunikationsverbindung über den jeweils in dem Servicefeld 22 angegebenen Telekommunikationsdienstleister ermöglichen.

Eine Liste der Namensfelder 19 aller Kontakte 7 der Kontaktliste 6 in der Speichereinheit 5 ist als Kopie in der Reihenfolge der Kontakte 7 der Kontaktliste 6 in einem Identifikationsspeicher 24 in dem Satellitengerät 3 gespeichert.

Im Weiteren wird das Verfahren zum Aufbau einer Telekommunikationsverbindung erläutert.

Der Verbindungsaufbau beginnt gemäß Schritt 100.

Es erfolgt in Schritt 110 eine Interaktion über die Benutzerschnittstelle 15 des Satellitengeräts 3. Gemäß dieser beispielhaften Ausführungsform wird zunächst der Auswahlknopf 17 gedrückt, der mit "OK" bezeichnet ist.

Es schließt sich Schritt 120 an. Darin wird der Inhalt des Namensfelds 19 des ersten Kontakts 7 der Kontaktliste 6 aus dem Identifikationsspeicher 24 ausgelesen und in der Displayzeile 16 des Satellitengeräts 3 angezeigt.

Im darauffolgenden Schritt 130 kann der Nutzer durch die "AUF" und "AB" gekennzeichneten Auswahlknöpfe 17 durch die Liste der Namensfelder 19 in dem Identifikationsspeicher 24 rollen, wobei jeweils der Inhalt des aktuellen Namensfelds in der Displayzeile 16 des Satellitengeräts 3 angezeigt wird.

In Schritt 140 wird durch erneutes Drücken des Auswahlknopfes 17 mit der Bezeichnung "OK" die Auswahl zu dem aktuell angezeigten Namensfeld 19 getätigt. Der zu diesem Namensfeld 19 gehörende Kontakt 7 ist damit ausgewählt.

Dazu wird im Schritt 150 der Inhalt des ausgewählten Namensfeld 19 von dem Satellitengerät 3 an das Zentralgerät 2 übertragen. Das Zentralgerät 2 wählt den entsprechenden Kontakt 7 für den Aufbau der Telekommunikationsverbindung aus.

Das Zentralgerät 2 wählt daraufhin in Schritt 160 automatisch den Kommunikationsdienstleister und die Verbindungsparameter des Kontakts 7 für diesen Telekommunikationsdienstleister aus. Die Auswahl des Telekommunikationsdienstleisters und der entsprechende Verbindungsparameter 23 erfolgen gemäß vorgegebener Prioritäten, die von dem Nutzer ausgewählt wurden. Die Einzelkontakte 20 sind gemäß diesen Prioritäten in dem Kontakt 7 verknüpft angeordnet, und werden entsprechend dieser Verknüpfung verwendet. Durch das Servicefeld 22 des jeweiligen Einzelkontakts 20 erfolgt eine Zuordnung zu dem jeweiligen Telekommunikationsdienstleister, so dass eine einfache Auswahl des Telekommunikationsdienstleisters möglich ist. Insbesondere wird vor Aufbau einer Telekommunikationsverbindung überprüft, ob ein Telekommunikationsanbieter verfügbar ist, das heißt im Falle eines Festnetzes, dass die Leitung nicht belegt und nicht blockiert ist, und im Falle eines VoIP-Telekommunikationsanbieters, dass dieser über die Datenverbindung erreichbar ist und seine Dienstleistungen anbieten kann.

In Schritt 170 wird überprüft, ob für den ausgewählten Kommunikationsdienstleister Statusinformationen in der Form eines Präsenzstatus vorliegen, der anzeigt, dass eine Person zu den ausgewählten Verbindungsparametern über diesen Kommunikationsdienstleister aktuell zu erreichen ist. Sind zu einem Kontakt 7 Präsenzinformationen vorhanden, wird das Verfahren mit Schritt 180 fortgesetzt, andernfalls mit Schritt 190.

In Schritt 180 wird überprüft, ob die Person zu dem Kontakt 7 über den ausgewählten Telekommunikationsdienstleister präsent ist, d.h. ob das Präsenzsignal "präsent" anzeigt. Ist dies nicht der Fall, springt das Verfahren zurück zu Schritt 160 und wählt automatisch den nächsten Telekommunikationsdienstleister aus. Das Verfahren geht an dieser Stelle weiter. Wenn die Person präsent ist wird das Verfahren mit Schritt 190 fortgesetzt.

In Schritt 190 wird der Aufbau der Telekommunikationsverbindung über diesen Telekommunikationsdienstleister initiiert. Dazu wird über die entsprechenden Verbindungsmittel 8, 13 der Verbindungsaufbau gestartet.

In Schritt 200 wird überprüft, ob der Verbindungsaufbau erfolgreich ist, d.h. ob die angerufene Person den Anruf entgegengenommen hat und die Telekommunikationsverbindung vollständig aufgebaut worden ist. Ist der Verbindungsaufbau erfolgreich, wird das Verfahren mit Schritt 210 beendet. Wenn nicht, springt das Verfahren zurück zu Schritt 160, wo ein folgender Telekommunikationsanbieter und die Verbindungsparameter automatisch ausgewählt werden. Das Verfahren geht dann an dieser Stelle weiter.

In Schritt 200 wird überprüft, ob der Verbindungsaufbau erfolgreich durchgeführt wurde, das heißt, ob der Angerufene das eingehende Gespräch angenommen hat und die Telekommunikationsverbindung vollständig aufgebaut werden konnte. Ist dies nicht der Fall, springt das Verfahren zurück zu Schritt 150 und wählt einen weiteren Telekommunikationsdienstleister aus. Wird in Schritt 190 festgestellt, dass der Verbindungsaufbau nicht erfolgreich war, endet das Verfahren mit Schritt 200. Andernfalls ist die Telekommunikationsverbindung erfolgreich aufgebaut.

Da in dem Identifikationsspeicher 24 des Satellitengeräts 3 eine Liste mit der Kopie der Namensfelder 19 der Kontakte 7, wie sie entsprechend in der Speichereinheit 5 des Zentralgeräts 2 abgelegt ist, ist initial eine Kommunikation zwischen Zentralgerät 2 und dem Satellitengerät 3 erforderlich, um die Namensfelder 19 von dem Zentralgerät 2 an das Satellitengerät 3 zu übertragen. Im Anschluss ist kontinuierlich eine Synchronisation der entsprechenden Liste in dem Identifikationsspeicher 24 des Satellitengeräts 3 mit der Kontaktliste 6 auf dem Zentralgerät 2 erforderlich, sobald eine Änderung der Kontaktliste 6 auf dem Zentralgerät 2 erfolgt.

In einer alternativen Ausführungsform ist ausschließlich die Kontaktliste 6 auf dem Zentralgerät 2 gespeichert. Entsprechend wird im Schritt 110 durch Drücken des Auswahlknopfes 17 mit der Aufschrift "OK" eine entsprechende Mitteilung von dem Satellitengerät 3 an das Zentralgerät 2 gesendet, woraufhin dieses das Namensfeld 19 des ersten Kontakts 7 in der Kontaktliste 6 an das Satellitengerät 3 überträgt, damit dieses in Schritt 120 angezeigt werden kann. Entsprechend werden beim Rollen durch die Kontaktliste 6 in Schritt 130 die jeweiligen Namensfelder von dem Satellitengerät 3 beim Zentralgerät 2 angefragt und an dieses übermittelt. Im Übrigen ist das Verfahren identisch zu dem zuvor beschriebenen.

In einer weiter alternativen Ausführungsform der vorliegenden Erfindung, die nicht in den Figuren gezeigt ist, ist das Telekommunikationsendgerät 1 integral ausgeführt, wobei Zentralgerät 2 und Satellitengerät 3 eine bauliche Einheit bilden, die entsprechend keine Funkmodule 4a, 4b umfasst. Der Identifikationsspeicher 24 entfällt entsprechend. Im Übrigen ist das Telekommunikationsendgerät 1 dieser alternativen Ausführungsform bau- und funktionsgleich mit dem Telekommunikationsendgerät 1 der ersten Ausführungsform. Das Verfahren zum Aufbau der Telekommunikationsverbindung entspricht dem zuvor beschriebenen mit den Änderungen, dass der Schritt 150 entfällt und die Auswahl eines Kontakts 7 direkt über die Namensfelder 19 der Kontaktliste 6 erfolgt.

Im Weiteren wird ein Telekommunikationsendgerät 1 gemäß einer zweiten Ausführungsform der vorliegenden Erfindung beschrieben. Das Telekommunikationsendgerät 1 unterscheidet sich von dem Telekommunikationsendgerät 1 der ersten Ausführungsform dadurch, dass es zwei Satellitengeräte 3 umfasst. Jedes der Satellitengeräte 3 ist identisch zu dem zuvor beschriebenen Satellitengerät 3 der ersten Ausführungsform ausgeführt. Das Verfahren zum Aufbau einer Telekommunikationsverbindung wird entsprechend von einem beliebigen der Satellitengeräte 3 initiiert.

Zusätzlich ist das Zentralgerät 2 zum Aufbau zweier paralleler Telekommunikationsverbindungen über die beiden Satellitengeräte 3 ausgeführt.

In einer alternativen Ausführungsform der vorliegenden Erfindung ist das Telekommunikationsendgerät 1 zur Durchführung einer Sprachsteuerung ausgeführt. Entsprechend wird durch ein Aktivieren durch Drücken des Auswahlknopfes 17 mit der Beschriftung "OK" die Sprachsteuerung aktiviert. Die Schritte 120 bis 140 werden ersetzt durch eine Erkennung eines Sprachbefehls zur Auswahl des anzurufenden Kontakts 7. Im Übrigen ist das Verfahren identisch zu dem oben beschriebenen.

**Bezugszeichenliste**

| | |
|---|---|
| Telekommunikationsendgerät | 1 |
| Zentralgerät | 2 |
| Satellitengerät | 3 |
| Funkmodul | 4a, 4b |
| Speichereinheit | 5 |
| Kontaktliste | 6 |
| Kontakt | 7 |
| Funkeinheit, Verbindungsmittel | 8 |
| DECT-Basis | 9 |
| Datenkommunikationseinheit | 10 |
| Internetzugangsgerät | 11 |
| Umsetzungseinheit | 12 |
| Verbindungsmittel | 13 |
| Anzeigevorrichtung | 14 |
| Benutzerschnittstelle | 15 |
| Displayzeile | 16 |
| Auswahlknöpfe | 17 |
| Namensfeld | 19 |
| Einzelkontakt | 20 |
| Identifikationsfeld | 21 |
| Servicefeld | 22 |
| Verbindungsparameter | 23 |
| Identifikationsspeicher | 24 |

## Patentansprüche

1. Verfahren zum Aufbau einer Telekommunikationsverbindung mit einem Telekommunikationsendgerät (1), wobei das Telekommunikationsendgerät (1) eine Speichereinheit (5) zum Speichern einer Kontaktliste (6) mit einer Mehrzahl Kontakten (7) und Verbindungsmittel (8, 13) zum Durchführen eines Verbindungsaufbaus über eine Mehrzahl verschiedener Telekommunikationsdienstleister umfasst, jeder Kontakt (7) als Container für die Aufnahme von einer Mehrzahl Einzelkontakte (20) ausgeführt ist, und wobei zu jedem Kontakt (7) eine Mehrzahl Verbindungsparameter (23) für verschiedene Telekommunikationsdienstleister speicherbar sind, umfassend folgende Schritte:
Auswählen eines Kontakts (7) aus der Kontaktliste (6),
Initiieren des Aufbaus der Telekommunikationsverbindung mit dem ausgewählten Kontakt (7),
automatisches Auswählen des Telekommunikationsdienstleisters und der Verbindungsparameter (23) des Kontakts (7) für diesen Telekommunikationsdienstleister gemäß vorgebbarer Prioritäten, umfassend das Auswählen eines Einzelkontakts (20) gemäß vorgebbarer Prioritäten, und
das Auswählen der Verbindungsparameter (23) des ausgewählten Einzelkontakts (20), und
das Auswerten von Statusinformationen zu dem Kontakt (7) von wenigstens einem Telekommunikationsdienstleister, und
automatischer Aufbau der Telekommunikationsverbindung mit den ausgewählten Verbindungsparametern (23) über den ausgewählten Telekommunikationsdienstleister.

2. Verfahren nach Anspruch 1, **dadurch gekennzeichnet, dass**
der Schritt des Auswählens eines Einzelkontakts (20) gemäß vorgebbarer Prioritäten das Auswählen eines Einzelkontakts (20) gemäß seiner Anordnung in einer logischen Reihe innerhalb des Kontakts (7) beinhaltet.

3. Verfahren nach einem der vorhergehenden Ansprüche, **dadurch gekennzeichnet, dass**
die Schritte des automatischen Auswählens des Telekommunikationsdienstleisters und der Verbindungsparameter (23) des Kontakts (7) für diesen Telekommunikationsdienstleister sowie des automatischen Aufbaus der Telekommunikationsverbindung mit den ausgewählten Verbindungsparametern (23) über den ausgewählten Telekommunikationsdienstleister wiederholt durchgeführt werden und, sobald eine Telekommunikationsverbindung hergestellt wurde, der Verbindungsaufbau über alle weiteren Telekommunikationsdienstleister abgebrochen wird.

4. Verfahren nach einem der vorhergehenden Ansprüche, **dadurch gekennzeichnet, dass**
der Schritt des automatischen Aufbaus der Telekommunikationsverbindung mit den ausgewählten Verbindungsparametern (23) über den ausgewählten Telekommunikationsdienstleister ohne erfolgreichen Verbindungsaufbau abgebrochen wird und das Verfahren mit dem Schritt des automatischen Auswählens des Telekommunikationsdienstleisters und der Verbindungsparameter (23) des Kontakts (7) für diesen Telekommunikationsdienstleister fortgesetzt wird, bis die Telekommunikationsverbindung aufgebaut ist.

5. Verfahren nach einem der vorhergehenden Ansprüche, **dadurch gekennzeichnet, dass**
die Schritte des Auswählens eines Kontakts (7) aus der Kontaktliste (6) sowie des Initiierens des Aufbaus der Telekommunikationsverbindung mit dem ausgewählten Kontakt (7) das Durchführen einer Sprachsteuerung umfassen.

6. Telekommunikationsendgerät (1) zur Verbindung mit einer Mehrzahl Telekommunikationsdienstleister umfassend
eine Speichereinheit (5), ausgestaltet zum Speichern einer Kontaktliste (6) mit einer Mehrzahl Kontakten (7), und
Verbindungsmittel (8, 13), ausgebildet zum Durchführen eines Verbindungsaufbaus über eine Mehrzahl verschiedener Telekommunikationsdienstleister, wobei
jeder Kontakt (7) als Container für die Aufnahme von einer Mehrzahl Einzelkontakte (20) ausgeführt ist, und
zu jedem Kontakt (7) eine Mehrzahl Verbindungsparameter (23) für verschiedene Telekommunikationsdienstleister speicherbar sind,
**dadurch gekennzeichnet, dass**
das Telekommunikationsendgerät (1) zum Aufbau einer Telekommunikationsverbindung nach dem Verfahren nach einem der vorherigen Ansprüche ausgebildet ist.

7. Telekommunikationsendgerät (1) nach Anspruch 6, **dadurch gekennzeichnet, dass**
die Verbindungsmittel (8, 13), ausgebildet zum Durchführen eines Verbindungsaufbaus über eine Mehrzahl verschiedener Telekommunikationsdienstleister eine Funkeinheit (8) nach dem DECT-Standard umfassen.

8. Telekommunikationsendgerät nach einem der Ansprüche 6 oder 7, **dadurch gekennzeichnet, dass**
die Verbindungsmittel (8, 13) ausgebildet zum Durchführen eines Verbindungsaufbaus über eine Mehrzahl verschiedener Telekommunikationsdienstleister eine Datenkommunikationseinheit (10) und eine Umsetzungseinheit (12) von Sprache auf Datenkommunikation umfassen.

9. Telekommunikationsendgerät (1) nach einem der Ansprüche 6 bis 8, **dadurch gekennzeichnet, dass**
das Telekommunikationsendgerät (1) ein Zentralgerät (2) und ein Satellitengerät (3) umfasst, die kabellos miteinander verbunden sind, wobei die Schritte des Auswählens eines Kontakts (7) aus der Kontaktliste (6) und des Initiierens eines Aufbaus der Telekommunikationsverbindung in dem Satellitengerät (3) und die übrigen Schritte in dem Zentralgerät (2) durchführbar sind.

10. Telekommunikationsendgerät (1) nach Anspruch 9, **dadurch gekennzeichnet, dass**
das Zentralgerät (2) und das Satellitengerät (3) jeweils ein Funkmodul (4a, 4b) nach dem DECT-Standard zur kabellosen Kommunikation umfassen.

11. Telekommunikationsendgerät (1) nach einem der Ansprüche 9 oder 10, **dadurch gekennzeichnet, dass**
das Telekommunikationsendgerät (1) eine Mehrzahl Satellitengeräte (3) umfasst.

## Claims

1. A method for establishing a telecommunication link to a telecommunication terminal (1), wherein the telecommunication terminal (1) comprises a storage unit (5) for storing a contacts list (6) containing a plurality of contacts (7) and connection means (8, 13) for establishing a connection via a plurality of different telecommunications service providers, each contact (7) being formed as a container for receiving a plurality of individual contacts (20), and wherein a plurality of connection parameters (23) for different telecommunications service providers can be stored for each contact (7), said method comprising the following steps:
selecting a contact (7) from the contacts list (6),
initiating the establishment of the telecommunication link to the selected contact (7),
automatically selecting the telecommunications service provider and the connection parameters (23) of the contact (7) for this telecommunications service provider in accordance with predefinable priorities, comprising the selection of an individual contact (20) in accordance with predefinable priorities, and
selecting the connection parameters (23) of the selected individual contact (20), and
evaluating status information regarding the contact (7) of at least one telecommunications service provider, and
automatically establishing the telecommunication link with the selected connection parameters (23) via the selected telecommunications service provider.

2. The method according to claim 1, **characterised in that** the step of selecting an individual contact (20) in accordance with predefinable priorities includes the selection of an individual contact (20) in accordance with its arrangement in a logical sequence within the contact (7).

3. The method according to either one of the preceding claims, **characterised in that**
the steps of automatically selecting the telecommunications service provider and the connection parameters (23) of the contact (7) for this telecommunications service provider and of automatically establishing the telecommunication link with the selected connection parameters (23) via the selected telecommunications service provider are performed repeatedly, and as soon as a telecommunication link has been produced the establishment of a connection via all further telecommunications service providers is cancelled.

4. The method according to any one of the preceding claims, **characterised in that**
the step of automatically establishing the telecommunication link with the selected connection parameters (23) via the selected telecommunications service provider without successful establishment of a connection is cancelled, and the method is continued with the step of automatically selecting the telecommunications service provider and the connection parameters (23) of the contact (7) for this telecommunications service provider until the telecommunication link is established.

5. The method according to any one of the preceding claims, **characterised in that**
the steps of selecting a contact (7) from the contact list (6) and of initiating the establishment of the telecommunication link to the selected contact (7) include the execution of a voice control.

6. A telecommunication terminal (1) for connection to a plurality of telecommunications service providers, comprising
a storage unit (5) designed to store a contacts list (6) containing a plurality of contacts (7), and
connection means (8, 13) designed to establish a connection via a plurality of different telecommunications service providers, wherein
each contact (7) is designed as a container for receiving a plurality of individual contacts (20), and
a plurality of connection parameters (23) for various telecommunications service providers can be stored for each contact (7),
**characterised in that**
the telecommunication terminal (1) is designed to establish a telecommunication link by the method according to any one of the preceding claims.

7. The telecommunication terminal (1) according to claim 6, **characterised in that**
the connection means (8, 13), designed to establish a connection via a plurality of various telecommunications service providers, comprise a radio unit (8) according to the DECT standard.

8. The telecommunication terminal (1) according to either one of claims 6 or 7, **characterised in that**
the connection means (8, 13), designed to establish a connection via a plurality of various telecommunications service providers, comprise a data communication unit (10) and a conversion unit (12) for converting speech to data communication.

9. The telecommunication terminal (1) according to any one of claims 6 to 8, **characterised in that**
the telecommunication terminal (1) comprises a central apparatus (2) and a satellite apparatus (3), which are connected to one another wirelessly, wherein the steps of selecting a contact (7) from the contact list (6) and of initiating establishment of the telecommunication link can be performed in the satellite apparatus (3), and the other steps can be performed in the central apparatus (2).

10. The telecommunication terminal (1) according to claim 9, **characterised in that**
the central apparatus (2) and the satellite apparatus (3) each comprise a radio module (4a, 4b) according to the DECT standard for wireless communication.

11. The telecommunication terminal (1) according to either one of claims 9 or 10, **characterised in that**
the telecommunication terminal (1) comprises a plurality of satellite apparatuses (3).

## Revendications

1. Procédé d'établissement d'une connexion de télécommunication avec un terminal de télécommunication (1), le terminal de télécommunication (1) comprenant une unité de mémoire (5) pour le stockage d'une liste de contacts (6) avec une multiplicité de contacts (7) et des systèmes de connexion (8, 13) pour l'exécution de l'établissement d'une connexion par le biais d'une multiplicité de fournisseurs de services de télécommunication différents, chaque contact (7) est conçu sous forme de contenant pour la réception d'une multiplicité de contacts individuels (20), et où, pour chaque contact (7), une multiplicité de paramètres de connexion (23) pour des fournisseurs de services de télécommunication différents peuvent être stockés, comprenant les étapes suivantes :
la sélection d'un contact (7) à partir de la liste de contacts (6),
l'initialisation de l'établissement de la connexion de télécommunication avec le contact (7) sélectionné,
la sélection automatique du fournisseur de services de télécommunication et des paramètres de connexion (23) du contact (7) pour ce fournisseur de services de télécommunication selon des priorités pouvant être prédéfinies, comprenant la sélection d'un contact individuel (20) selon des priorités pouvant être prédéfinies et la sélection des paramètres de connexion (23) du contact individuel (20) sélectionné, et
l'évaluation d'informations d'état vis-à-vis du contact (7) d'au moins un fournisseur de services de télécommunication, et
l'établissement automatique de la connexion de télécommunication avec les paramètres de connexion (23) sélectionnés par le biais du fournisseur de services de télécommunication sélectionné.

2. Procédé selon la revendication 1, **caractérisé en ce que**
l'étape de sélection d'un contact individuel (20) selon des priorités pouvant être prédéfinies contient la sélection d'un contact individuel (20) en fonction de son rang dans une suite logique dans le contact (7).

3. Procédé selon l'une des revendications précédentes, **caractérisé en ce que**
les étapes de sélection automatique du fournisseur de services de télécommunication et des paramètres de connexion (23) du contact (7) pour ce fournisseur de services de télécommunication, ainsi que d'établissement automatique de la connexion de télécommunication avec les paramètres de connexion (23) sélectionnés peuvent être exécutées de manière répétée par le biais du fournisseur de services de télécommunication et, dès qu'une connexion de télécommunication a été établie, l'établissement de la connexion pour tous les autres fournisseurs de services de télécommunication est interrompu.

4. Procédé selon l'une des revendications précédentes, **caractérisé en ce que**
l'étape d'établissement automatique de la connexion de télécommunication avec les paramètres de connexion (23) sélectionnés est interrompue sans établissement de connexion réussi par le biais du fournisseur de services de télécommunication et le procédé est poursuivi avec l'étape de sélection automatique du fournisseur de services de télécommunication et des paramètres de connexion (23) du contact (7) pour ce fournisseur de services de télécommunication jusqu'à ce que la connexion de télécommunication soit établie.

5. Procédé selon l'une des revendications précédentes, **caractérisé en ce que**
les étapes de sélection d'un contact (7) à partir de la liste de contacts (6), ainsi que d'initialisation de l'établissement de la connexion de télécommunication avec le contact (7) sélectionné comprennent l'exécution d'une commande vocale.

6. Serveur de télécommunication (1) permettant la connexion avec une multiplicité de fournisseurs de services de télécommunication comprenant
une unité de mémoire (5) conçue pour le stockage d'une liste de contacts (6) avec une multiplicité de contacts (7), et
des systèmes de connexion (8, 13) conçus pour l'exécution de l'établissement d'une connexion par le biais d'une multiplicité de fournisseurs de services de télécommunication différents, où
chaque contact (7) est conçu sous forme d'un contenant pour la réception d'une multiplicité de contacts individuels (20), et
une multiplicité de paramètres de connexion (23) peut être stockée pour chaque contact (7) pour divers fournisseurs de services de télécommunication,
**caractérisé en ce que**
le serveur de télécommunication (1) est conçu pour l'établissement d'une connexion de télécommunication d'après le procédé selon l'une des revendications précédentes.

7. Serveur de télécommunication (1) selon la revendication 6, **caractérisé en ce que**
les systèmes de connexion (8, 13) conçus pour l'exécution de l'établissement d'une connexion par le biais d'une multiplicité de fournisseurs de services de télécommunication différents comprennent un émetteur radio (8) selon la norme DECT.

8. Serveur de télécommunication (1) selon l'une des revendications 6 ou 7, **caractérisé en ce que**
les systèmes de connexion (8, 13) conçus pour l'exécution de l'établissement d'une connexion par le biais d'une multiplicité de fournisseurs de services de télécommunication différents comprennent une unité de communication de données (10) et une unité de conversion (12) du langage parlé vers la communication par données.

9. Serveur de télécommunication (1) selon l'une des revendications 6 à 8, **caractérisé en ce que**
le serveur (1) comprend un appareil central (2) et un appareil satellite (3) qui sont reliés l'un à l'autre sans fil, où les étapes de sélection d'un contact (7) à partir de la liste de contacts (6) et d'initialisation de l'établissement d'une connexion de télécommunication dans l'appareil satellite (3) et les autres étapes peuvent être exécutées dans l'appareil central (2).

10. Serveur de télécommunication (1) selon la revendication 9, **caractérisé en ce que**
l'appareil central (2) et l'appareil satellite (3) comprennent respectivement un module radio (4a, 4b) selon la norme DECT pour la communication sans fil.

11. Serveur de télécommunication (1) selon l'une des revendications 9 ou 10, **caractérisé en ce que**
le serveur de télécommunication (1) comprend une multiplicité d'appareils satellites (3).
